# EUROPÄISCHE PATENTSCHRIFT

(11) **EP 1 590 240 B1**
(45) Veröffentlichungstag und Bekanntmachung des Hinweises auf die Patenterteilung: **06.09.2006**
(21) Anmeldenummer: 04707483.6
(22) Anmeldetag: 03.02.2004
(51) Int. Cl.: B64C 3/38, B64C 27/46

(54) **VERFORMBARES AERODYNAMISCHES PROFIL**
DEFORMABLE AERODYNAMIC PROFILE
PROFILE AERODYNAMIQUE DEFORMABLE

(30) Priorität: 04.02.2003 DE 10304530
(43) Veröffentlichungstag der Anmeldung: 02.11.2005
(73) Patentinhaber: EADS Deutschland GmbH, 85521 Ottobrunn (DE)
(72) Erfinder: JÄNKER, Peter, 85521 Riemerling (DE)
(86) Internationale Anmeldenummer: PCT/DE2004/000162
(87) Internationale Veröffentlichungsnummer: WO 2004/069651

(56) Entgegenhaltungen:
- EP-A- 1 235 284
- WO-A-02/31378
- DE-A- 10 054 643
- US-A- 6 048 622
- US-B1- 6 375 127

## Beschreibung

Die vorliegende Erfindung betrifft ein verformbares aerodynamisches Profil gemäß dem Oberbegriff des Anspruches 1.

Verschiedene Anordnungen und Verfahren sind bekannt, um den Auftrieb und den Strömungswiderstand eines umströmten Körpers, zum Beispiel in Form eines aerodynamischen Profils, an verschiedene Umgebungsbedingungen anzupassen und zu optimieren. Derartige aerodynamische Profile können Hubschrauberrotorblätter, Flugzeugtragflächen oder Turbinenschaufeln sein, um nur einige Beispiele zu nennen.

Aus dem Bereich der Luftfahrttechnik sind eine Vielzahl von Lösungen bekannt, die unter Verwendung unterschiedlicher Verstelleinrichtungen mechanisch ein Verformen der Profilwölbung derartiger aerodynamischer Profile erzielen. Dabei treten jedoch in der Regel Spalten und Hohlräume in der Außenhaut des Profils auf, was für viele Anwendungen von Nachteil ist.

Um diesem Problem entgegenzuwirken ist in DE 196 43 222 C2 oder US 6 375 127 (entsprechend dem Oberbegriff des Anspruchs 1) eine Anordnung beschrieben, bei der die Umströmungseigenschaften durch ein kontinuierliches Verformen eines aerodynamischen Profils mit elastisch verformbarer Außenhaut unter Verwendung einer in dem Profil integrierten Verstelleinrichtung verändert werden.

Ferner ist aus DE 197 09 917 C1 eine Vorrichtung zur gesteuerten Verformung einer Schalenstruktur bekannt, die eine Anzahl von Beulrippen aufweist, die wiederum über Aktuatoren miteinander verbunden sind, um eine Veränderung der Wölbung eines mit den Beulrippen verbundenen elastischen Bauteils zu bewirken.

Des Weiteren sind aus dem Stand der Technik Verbundstrukturen zum Bewirken und Erfassen von Deformationen bekannt, die eine Vielzahl von parallel verlaufender Piezofasern aufweisen (z.B. US 5,869,189 und US 6,048,622). Nachteil hierbei ist jedoch, dass die Fasern nicht nur sehr teuer sondern auch auf Grund ihres hohen Gewichtes relativ ineffizient sind. Zudem ist eine geeignete Kontaktierung der Piezofasern erforderlich, wobei auch zu berücksichtigen ist, das eine möglichst homogene Feldverteilung, die für das Hervorrufen des piezoelektrischen Effektes erforderlich ist, besteht. Die hierfür erforderlichen Elektroden können beispielsweise durch separate Lagen bzw. Elektrodenschichten bereit gestellt werden, die nur mit entsprechendem technischen Zusatzaufwand in die Verbundstruktur integriert werden können. Bei der Verwendung dieser bekannten Verbundstruktur zum Bewirken einer Deformation ist ferner von Nachteil, dass in der Regel eine Hochspannung zur Ansteuerung der piezoelektrischen Fasern erforderlich ist. Dies bedeutet nicht nur, dass ein hoher Energiebedarf erforderlich ist, was die Anordnung uneffizient macht, sondern auch, dass eine aufwändige Steuerelektronik nötig ist. Zudem müssen entsprechende Sicherheitsvorkehrungen getroffen werden.

Somit liegt der vorliegenden Erfindung die Aufgabe zu Grunde, ein verformbares, aerodynamisches Profil zu schaffen, dessen Profilwölbung technisch einfach und wirkungsvoll veränderbar ist.

Die Aufgabe wird durch ein aerodynamisches Profil gelöst, das einen vorderen Profilbereich sowie einen in der Abströmung liegenden hinteren Profilbereich aufweist und durch eine druckseitige sowie saugseitige Deckhaut begrenzt ist, die in einer Profilhinterkante zusammenlaufen, und sich erfindungsgemäß dadurch auszeichnet, dass das Profil zu dessen Verformung zumindest stellenweise mit d33-Piezoaktuatoren versehen ist, welche aus in Längsrichtung geschnittenen, stapelförmigen piezoelektrischen Elementen bestehen, wobei deren Längenänderung bei elektrischer Beaufschlagung im wesentlichen in Richtung der Ebenen der Deckhäute erfolgt.

Durch die Verwendung und entsprechende Ausrichtung von piezoelektrischen Aktuatoren mit sogenanntem Longitudinaleffekt (d33-Effekt), wobei die Längenänderung des piezoelektrischen Werkstoffes in Richtung des elektrischen Feldes erfolgt, welcher bekanntlich größer ist als der gewöhnliche Piezoeffekt (d31-Effekt), bei dem die Längenänderung senkrecht zum elektrischen Feld erfolgt, ist ein effektiveres Einleiten von Kräften in das aerodynamische Profil möglich.

Besonders zweckmäßig ist es, die d33-Piezoaktuatoren auf der druckseitigen und/oder saugseitigen Deckhaut anzuordnen. Die Deckhäute bestehen dabei üblicherweise aus gängigen Konstruktionswerkstoffen und die Fixierung der d33-Piezoaktuatoren erfolgt z.B. durch Aufkleben. Zur Befestigung können aber auch mechanische Befestigungsmittel verwendet werden (z.B. Klemm- oder Schraubvorrichtungen). Zusätzlich kann die mit den Piezoaktuatoren versehene Deckhaut mit einer Schutzschicht versehen sein, um die Piezoaktuatoren vor Stoß, Druck, Zug oder anderen äußeren Einwirkungen (einschließlich Umwelteinflüssen) zu schützen.

Gemäß einer weiteren Ausführungsform sind die d33-Piezoaktuatoren in der druckseitigen und/oder saugseitigen Deckhaut integriert. Diese Konfiguration wird in sogenannten Verbundstrukturen bevorzugt, die metallischer Natur sein können aber auch sogenannte MMC's ("Metall Matrix Composites"). Ebenso können die d33-Piezoaktuatoren in Faserverbundstrukturen integriert sein. Ein Vorteil besteht hierbei darin, dass die Piezoaktuatoren automatisch geschützt sind.

In analoger Weise findet das erfindungsgemäße Prinzip auch Anwendung auf andere Auftriebskörper, die beispielsweise an dem aerodynamischen Profil angelenkt sind, wie zum Beispiel Steuerklappen. In diesem Fall ist die Steuerklappe mit d33-Piezoaktuatoren versehen, wobei die d33-Piezoaktuatoren wiederum so ausgerichtet sind, dass deren Längenänderung bei elektrischer Beaufschlagung in analoger Weise im wesentlichen in Richtung der Ebene der Klappe erfolgt. Besonders vorteilhaft ist dabei eine Ausgestaltung, bei der die mit d33-Piezoaktuatoren versehene Klappe an der Profilhinterkante des aerodynamischen Profils angelenkt ist.

Besonders vorteilhaft ist es, dass als d33-Piezoaktuatoren stapelförmige piezoelektrische Elemente (sogenannte "Piezostacks") verwendet werden, die bekanntlich einen schichtförmigen Aufbau aufweisen, bei dem sich Elektrodenlagen und Schichten aus piezoelektrischem Werkstoff abwechseln (und somit auch gleichbedeutend als "schichtförmige" Piezoaktuatoren bezeichnet werden). Dies hat den Vorteil, dass die Elektroden in dem Piezoaktuator integriert sind, was die Kontaktierung des Piezoaktuators erheblich erleichtert und gleichzeitig für eine homogene Feldverteilung innerhalb des Piezoaktuators sorgt. Dabei ist es besonders zweckmäßig, dass das elektrische Feld zum Hervorrufen des d33-Effektes über die in dem schichtförmigen Piezoaktuator integrierten Elektroden bereit gestellt wird. Dadurch ist die erfindungsgemäße Anordnung besonders effektiv und technisch einfach ausführbar.

Ferner ist es zweckmäßig, dass die schichtförmigen d33-Piezoaktuatoren eine geringe Dicke von ca. 0,5 bis 2,5 mm aufweisen, so dass sie selbst die Strömungsverhältnisse kaum beeinflussen. Dabei ist es vorteilhaft, dass derartige dünne, schichtförmige d33-Piezoaktuatoren einfach in die Deckhäute von aerodynamischen Profilen eingelassen oder integriert werden können und ein geringes Gewicht aufweisen.

Ferner ist es zweckmäßig, dass die Seitenabmessungen der d33-Piezoaktuatoren zwischen 5 und 60 mm liegen. Dadurch ist eine Anpassung an vorgegebene Geometrien (z.B. Ecken, Kanten, Rundungen etc.) leicht möglich.

Das erfindungsgemäße Prinzip findet hauptsächlich Anwendung bei Hubschrauberrotorblättern, Flugzeugtragflächen, Turbinenschaufeln oder dergleichen.

Im Folgenden wird die Erfindung anhand der beigefügten Abbildungen in näheren Einzelheiten erläutert. In denen zeigt:
- Fig.1: eine schematische dreidimensionale Ansicht eines aerodynamischen Profils mit d33-Piezoaktuatoren;
- Fig. 2: eine schematische Darstellung eines stapelförmigen piezoelektrischen Elementes zur Erläuterung
a) des d33-Effektes und
b) des d31-Effektes;
- Fig. 3: schematische Ansichten zur Erläuterung einer Torsionsverwölbung an Hand
a) einer Teilquerschnittsansicht einer Deckhaut; und
b) einer Draufsicht des in Fig. 3a dargestellten Ausschnitts;
- Fig. 4: eine Schnittansicht einer weiteren Ausführungsform des erfindungsgemäßen aerodynamischen Profils; und
- Fig. 5: eine schematische dreidimensionale Ansicht eines aerodynamischen Profils mit angelenkter Steuerklappe.

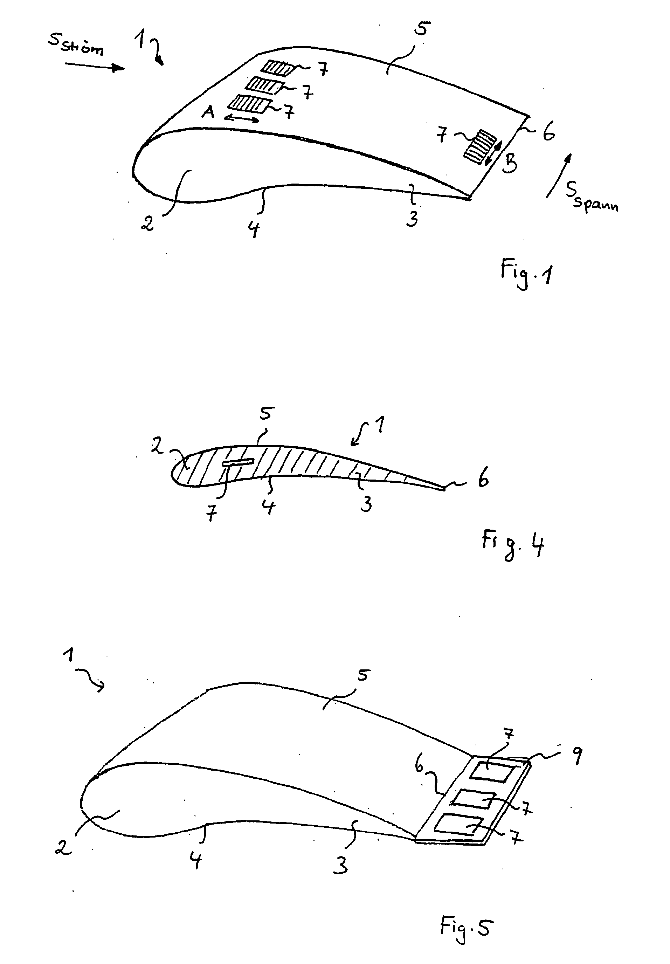

Figur 1 zeigt in allgemeiner Form ein aerodynamisches Profil 1 in schematischer, dreidimensionaler Darstellung. Das Profil 1 weist einen vorderen Profilbereich 2 sowie einen in der Abströmung liegenden hinteren Profilbereich 3 auf. Zur Verdeutlichung ist in Figur 1 die Strömungsrichtung mit Pfeil S_{ström} bezeichnet. Das Profil 1 wird auf bekannte Weise durch eine druckseitige Deckhaut 4 sowie eine saugseitige Deckhaut 5 begrenzt, die im hinteren Profilbereich 3 in einer Profilhinterkante 6 zusammenlaufen. Die Profilhinterkante 6 verläuft dabei in Spannweitenrichtung Sₛₚₐₙₙ. Ein derartiges aerodynamisches Profil 1 ist z.B. ein Hubschrauberrotorblatt oder eine Flugzeugtragfläche, die aus dem Stand der Technik wohlbekannt sind, so dass auf eine Beschreibung weiterer Einzelheiten verzichtet werden kann.

Das aerodynamische Profil 1 ist ferner mit Piezoaktuatoren 7 versehen, die in der Ausführungsform gemäß Figur 1 auf der saugseitigen Deckhaut 5 angeordnet sind. Selbstverständlich können die Aktuatoren auch zusätzlich oder ausschließlich auf der druckseitigen Deckhaut 4 - je nach Anwendungsbedarf - angeordnet sein. Die Piezoaktuatoren 7 sind beispielsweise durch Kleben oder andere geeignete Befestigungsmittel (z.B. Klemm-, Schraubvorrichtungen etc.) an der Deckhaut bzw. den Deckhäuten befestigt.

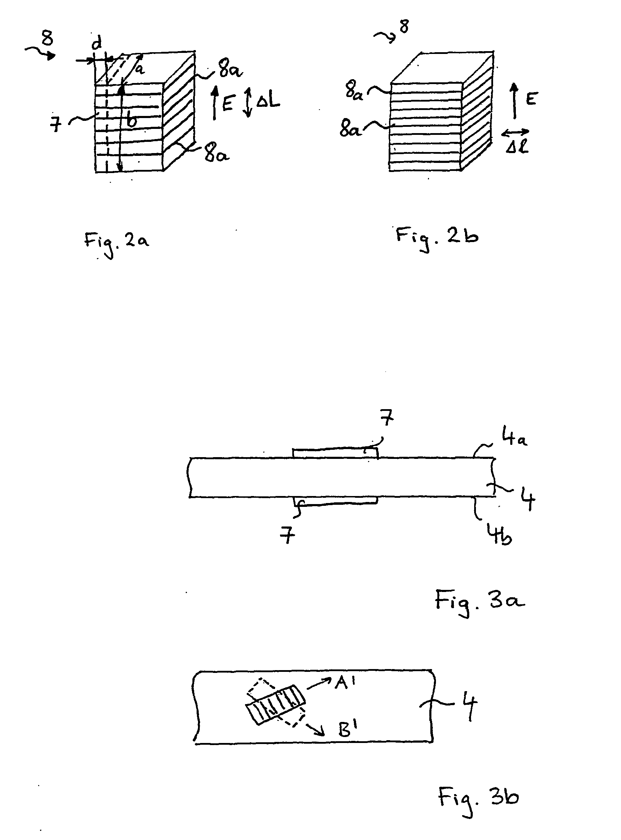

Die verwendeten Piezoaktuatoren 7 weisen den sogenannten d33-Effekt (Longitudinaleffekt) auf, der im Zusammenhang mit Figur 2 näher erläutert wird. Die Figuren 2a und 2b zeigen in schematischer Darstellung ein stapelförmiges piezoelektrisches Element 8 (auch "Piezostack" genannt), das bekanntlich aus alternierend angeordneten Schichten aus elektrisch leitfähigem und piezoelektrischem Material aufgebaut ist. Die Schichten aus elektrisch leitfähigem Material stellen Elektroden 8a dar. In dem in Fig. 2a gezeigten Fall liegt das elektrische Feld E in Stapel- bzw. Längsrichtung des piezoelektrischen Elementes 8 an, wobei das elektrische Feld E zweckmäßigerweise über die Elektroden 8a bereitgestellt wird. Aufgrund des elektrischen Feldes E dehnt sich der piezoelektrische Werkstoff in Richtung des elektrischen Feldes E aus. Diese Längenänderung ist in Figur 2a mit ΔL bezeichnet und ist bekanntlich größer als die Längenänderung Δl beim d31-Effekt, bei dem die Längenänderung Δl quer zum elektrischen Feld E erfolgt (s. Fig. 2b).

Der Piezostack 8 von Fig. 2a wird zur Verwendung als d33-Piezoaktuatoren 7 für das in Fig. 1 schematisch dargestellte aerodynamische Profil in Längsrichtung geschnitten, wobei der schichtförmige Aufbau mit alternierend angeordnetem piezoelektrischen und elektrisch leitfähigen Material beibehalten wird. Die Dicke "d" der so geschnittene Piezoaktuatoren 7 beträgt typischerweise 0,5 bis 2,5 mm und die Seitenabmessungen "a" und "b" liegen typischerweise zwischen 5 und 60 mm.

Die Anordnung der geschnittenen, schichtförmigen d33-Piezoaktuatoren 7 auf dem aerodynamischen Profil 1 erfolgt je nach Anwendung, so dass die Profilwölbung in gewünschter Richtung veränderbar ist. Dies wird nachstehend wiederum unter Bezugnahme auf Fig. 1 näher erläutert. Figur 1 zeigt exemplarisch drei im vorderen Profilbereich 2 angeordnete d33-Piezoaktuatoren 7. Die d33-Piezoaktuatoren 7 sind so ausgerichtet, dass die Längenänderung ΔL bei elektrischer Beaufschlagung der d33-Piezoaktuatoren 7 innerhalb der Deckhaut 5 in Strömungsrichtung S_{ström} erfolgt, was in Figur 1 mit dem Doppelpfeil "A" angedeutet ist. Daneben können die d33-Piezoaktuatoren 7 auch so angeordnet werden, dass ihre Längenänderung in der Ebene der Deckhaut 5 in Spannweitenrichtung erfolgt, was durch den Aktuator 7, der in der Nähe der Hinterkante 6 angeordnet ist, dargestellt ist. Die Richtung der Längenänderung dieses Aktuators ist dabei mit Doppelpfeil "B" bezeichnet. Die Piezoaktuatoren 7 können selbstverständlich auch so angeordnet werden, dass die Längenänderung innerhalb bzw. parallel zu den Deckhautebenen in eine Richtung weist, die zwischen den Richtungen A und B liegt (in Fig. 1 nicht dargestellt). Geringe Abweichungen beispielsweise aufgrund einer nicht vollständig planen Befestigung auf den Deckhäuten (d.h. die Piezoaktuatoren sind geringfügig bezüglich der Deckhautebenen geneigt) sind unschädlich und liegen im Toleranzbereich. Wesentlich ist, dass die d33-Piezoaktuatoren derart angeordnet sind, dass ihre Längenänderung bei elektrischer Beaufschlagung im wesentlichen in Richtung der Ebenen der Deckhäute 4 bzw. 5 verläuft.

Auf diese Weise können in der Ebene der Deckhäute 4, 5 entsprechende Längenänderungen und damit Verwölbungen erzielt werden.

Für den Fall, dass eine Torsion des aerodynamischen Profils 1 erwünscht wird, werden die d33-Piezoaktuatoren 7 in analoger Weise auf beiden Seiten der jeweiligen Deckhaut 4 bzw. 5 angeordnet, was nachstehend an Hand von Figur 3a und 3b näher erläutert wird. Figur 3a zeigt exemplarisch eine Teilquerschnittsansicht der druckseitigen Deckhaut 4, an deren Ober- und Unterseite 4a, 4b d33-Piezoaktuatoren 7 angebracht sind. Wie zuvor beschriebenen, sind die d33-Piezoaktuatoren 7 so angeordnet, dass deren Längenänderung bei elektrischer Beaufschlagung im wesentlichen in Richtung der Deckhautebene erfolgt. Die Piezoaktuatoren 7 auf der Ober- und Unterseite 4a, 4b weisen jedoch in Bezug aufeinander eine andere Ausrichtung aus, was in Figur 3b dargestellt ist, die eine Draufsicht des in Figur 3a gezeigten Ausschnitts darstellt. Der auf der Oberseite 4a angeordnete d33-Piezoaktuator 7 weist innerhalb der Ebene der Deckhaut 4 in eine Richtung A' und der auf der unteren Seite 4b angeordnete Piezoaktuator 7 (gestrichelt dargestellt) weist in eine Richtung B'. Durch diese "gekreuzte" Anordnung, wird bei Betätigung der Piezoaktuatoren 7 eine Torsion der entsprechenden Deckhaut bewirkt.

Gemäß einer weiteren Ausführungsform, die nicht dargestellt ist, können die dünnen d33-Piezoaktuatoren 7 jeweils in die druck- bzw. saugseitigen Deckhäute 4, 5 integriert sein. Eine derartige Ausgestaltung ist beispielsweise von Nutzen, wenn die Deckhäute aus Verbundwerkstoffen bestehen. Durch das Integrieren der Piezoaktuatoren in die Verbundstruktur sind einerseits die Aktuatoren 7 geschützt, andererseits wird eine möglicht symmetrische Verwölbung bewirkt. Letztere ist insbesondere dann von Vorteil, wenn die Deckhäute eine relativ große Dicke im Verhältnis zur Aktuatordicke "d" aufweisen. Eine derartige integrierte Anordnung findet typischerweise bei Verbundstrukturen (z.B. metallische Verbundstrukturen, MMC's, Faserverbundwerkstoffe etc.) Anwendung.

Bei einer speziellen Ausgestaltung dieser Ausführungsform, die schematisch in Fig. 4 dargestellt ist, sind die Deckhäute nicht separat aus einem Verbundwerkstoff aufgebaut, sondern das gesamte Profil ist als Verbundwerkstoff ausgebildet. In diesem Fall ist das aerodynamische Profil 1 nicht hohl, sondern weist eine kompakte Bauweise auf und die Piezoaktuatoren 7 sind innerhalb des Profils 1, angeordnet, wobei in Fig. 4 lediglich schematisch ein Piezoaktuator 7 dargestellt ist.

Ferner sei angemerkt, dass in analoger Weise das Wirkungsprinzip der Erfindung auch für weitere Anströmprofile, die beispielsweise an dem aerodynamischen Profil 1 angebracht sind, anwendbar ist. Dies ist schematisch in Figur 5 dargestellt, die ein aerodynamisches Profil 1 zeigt, an dessen Profilhinterkante 6 eine weiteres Anströmprofil in Form einer Klappe 9 schwenkbar angelenkt ist. Zur Auslenkung bzw. Verwölbung der Klappe 9 sind in diesem Ausführungsbeispiel die d33-Piezoaktuatoren 7 an der Klappe 9 angebracht, wobei die Längenänderung der d33-Piezoaktuatoren bei deren elektrischer Beaufschlagung analog zu der im Zusammenhang mit Fig.1 beschriebenen Anordnung in Richtung der Ebene der Klappe 9 erfolgt.

In jeder der voranstehend beschriebenen Ausführungsformen kann der Piezoaktuator 7 mit elektrisch isolierendem Material (z.B. Keramik, Polymer etc.) vollständig oder lediglich an der Grenzfläche zur Struktur (z.B. druck oder saugseitige Deckhaut 4, 5) umhüllt bzw. beschuchtet werden, um eine Isolation zur Struktur zu gewährleisten. Dies ist insbesondere dann relevant, wenn die Struktur, auf die der Piezoaktuator aufgebracht ist, elektrisch leiten ist. In analoger Weise kann eine derartige Umhüllung auch für Schutzzwecke verwendet werden.

Die hier verwendeten stapelförmigen d33-Piezoaktuatoren können auf einfache Weise, wie voranstehend beschrieben, über die Elektroden 8a elektrische versorgt werden. Die Betriebsspannung liegt typischerweise im Bereich von 50 - 500 V und eine Kontaktierung der Elektroden 8a kann durch technisch einfach realisierbare Löt- oder Busverbindungen bewirkt werden.

Das voranstehend erläuterte erfindungsgemäße Prinzip findet hauptsächlich bei der Verwölbung von Hubschrauberrotorblättern, Flugzeugtragflächen, Turbinenschaufeln oder dergleichen Anwendung. Die Verwendung der erfindungsgemäßen Idee ist jedoch nicht auf diese speziellen Beispiele beschränkt.

## Patentansprüche

1. Verformbares aerodynamisches Profil (1), das einen vorderen Profilbereich (2) sowie einen in der Abströmung liegenden hinteren Profilbereich (3) aufweist und durch eine druckseitige sowie saugseitige Deckhaut (4, 5) begrenzt ist, die in einer Profilhinterkante (6) zusammenlaufen, wobei das Profil (1) zu dessen Verformung zumindest stellenweise mit Piezoaktuatoren (7) versehen ist, wobei die Längenänderung der Piezoaktuatoren (7) bei elektrischer Beaufschlagung im Wesentlichen-in Richtung der Ebenen der Deckhäute (4, 5) erfolgt, **dadurch gekennzeichnet, dass** die Piezoaktuatoren aus d33-Piezoaktuatoren bestehen, welche aus in Längsrichtung geschnittenen, stapelförmigen piezoelektrischen Elementen bestehen.

2. Verformbares aerodynamisches Profil (1) nach Anspruch 1, **dadurch gekennzeichnet, dass** die d33-Piezoaktuatoren (7) auf der druckseitigen und/oder saugseitigen Deckhaut (4, 5) angeordnet sind.

3. Verformbares aerodynamisches Profil (1) nach Anspruch 1, **dadurch gekennzeichnet, dass** die d33-Piezoaktuatoren (7) in der druckseitigen und/oder saugseitigen Deckhaut (4, 5) integriert sind.

4. Verformbares aerodynamisches Profil (1) nach Anspruch 3, **dadurch gekennzeichnet, dass** die druckseitige und/oder saugseitige Deckhaut (4, 5) eine Verbundstruktur aufweisen/aufweist.

5. Verformbares aerodynamisches Profil (1) nach einem der Ansprüche 1 - 4, **dadurch gekennzeichnet, dass** an dem Profil (1) zumindest eine Klappe (9) angelenkt ist, die mit d33-Piezoaktuatoren (7) versehen ist, wobei deren Längenausdehnung bei elektrischer Beaufschlagung im wesentlichen in Richtung der Ebene der Klappe (9) erfolgt.

6. Verformbares aerodynamisches Profil (1) nach Anspruch 5, **dadurch gekennzeichnet, dass** die mindestens eine Klappe (9) an der Profilhinterkante (6) angelenkt ist.

7. Verformbares aerodynamisches Profil (1) nach einem der vorangegangenen Ansprüche, **dadurch gekennzeichnet, dass** die d33-Piezoaktuatoren (7) aus stapelförmigen piezoelektrischen Elementen (8) mit darin integrierten Elektroden (8a) bestehen.

8. Verformbares aerodynamisches Profil (1) nach Anspruch 7, **dadurch gekennzeichnet, dass** das elektriche Feld (E) zum Hervorrufen des d33-Effektes über die Elektroden (8a) bereitgestellt wird.

9. Verformbares aerodynamisches Profil (1) nach Anspruch 7, **dadurch gekennzeichnet, dass** die schichtförmigen d33-Piezoaktuatoren (7) eine Dicke (d) von ungefähr 0,5 bis 2,5 mm aufweisen.

10. Verformbares aerodynamisches Profil (1) nach Anspruch 7 oder 9, **dadurch gekennzeichnet, dass** die schichtförmigen d33-Piezoaktuatoren (7) Seitenkantenabmessungen (a, b) von ungefähr 5 bis 60 mm aufweisen.

11. Verformbares aerodynamisches Profil (1) nach einem der vorangegangenen Ansprüche, **dadurch gekennzeichnet, dass** das aerodynamische Profil ein Hubschrauberrotorblatt, eine Flugzeugtragfläche, eine Turbinenschaufel ist.

## Claims

1. A deformable aerodynamic profile (1), which comprises a leading profile area (2) and, lying in the outflow, a trailing profile area (3) and is defined by a pressure-side and a suction-side covering skin (4, 5), which converge at a profile trailing edge (6), wherein for its deformation the profile (1) is provided at discrete locations with piezo actuators (7), wherein the change in length of the piezo actuators (7) when they are supplied with electricity is effected substantially in the direction of the planes of the covering skins (4, 5), **characterised in that** the piezo actuators comprise d33 piezo actuators, which comprise stack-form piezoelectric elements cut lengthwise.

2. A deformable aerodynamic profile (1) according to claim 1, **characterised in that** the d33 piezo actuators (7) are arranged on the pressure-side and/or suction-side covering skin (4, 5).

3. A deformable aerodynamic profile (1) according to claim 1, **characterised in that** the d33 piezo actuators (7) are integrated in the pressure-side and/or suction-side covering skin (4, 5).

4. A deformable aerodynamic profile (1) according to claim 3, **characterised in that** the pressure-side and/or suction-side covering skin (4, 5) comprise/comprises a composite structure.

5. A deformable aerodynamic profile (1) according to any one of claims 1 to 4, **characterised in that** at least one flap (9) is articulated to the profile (1) and is provided with d33 piezo actuators (7), the change in length of which when supplied with electricity is effected substantially in the direction of the plane of the flap (9).

6. A deformable aerodynamic profile (1) according to claim 5, **characterised in that** the at least one flap (9) is articulated to the profile trailing edge (6).

7. A deformable aerodynamic profile (1) according to any one of the preceding claims, **characterised in that** the d33 piezo actuators (7) comprise stack-form piezoelectric elements (8) with electrodes (8a) integrated therein.

8. A deformable aerodynamic profile (1) according to claim 7, **characterised in that** the electric field (E) for inducing the d33 effect is made available via the electrodes (8a).

9. A deformable aerodynamic profile (1) according to claim 7, **characterised in that** the layered d33 piezo actuators (7) have a thickness (d) of about 0.5 to 2.5 mm.

10. A deformable aerodynamic profile (1) according to claim 7 or 9, **characterised in that** the layered d33 piezo actuators (7) have lateral dimensions (a, b) of about 5 to 60 mm.

11. A deformable aerodynamic profile (1) according to any one of the preceding claims, **characterised in that** the aerodynamic profile is a helicopter rotor blade, an aircraft wing or a turbine blade.

## Revendications

1. Profilé aérodynamique déformable (1), qui présente une zone de profilé avant (2) et une zone de profilé arrière (3) située dans l'écoulement de sortie et est délimité par une peau de couverture (4, 5) côté refoulement ainsi que côté aspiration, lesquelles peaux convergent en un bord de fuite (6) du profilé, le profilé (1) étant muni pour sa déformation, au moins par endroits, d'actuateurs piézoélectriques (7), la variation de longueur des actuateurs piézoélectriques (7), sous l'effet d'une sollicitation électrique, s'effectuant essentiellement en direction des plans des peaux de couverture (4, 5), **caractérisé en ce que** les actuateurs piézoélectriques sont constitués d'actuateurs piézoélectriques d33, qui se composent d'éléments piézoélectriques en forme de pile découpés dans la direction longitudinale.

2. Profilé aérodynamique déformable (1) suivant la revendication 1, **caractérisé en ce que** les actuateurs piézoélectriques d33 (7) sont disposés sur la peau de couverture (4, 5) côté refoulement et/ou côté aspiration.

3. Profilé aérodynamique déformable (1) suivant la revendication 1, **caractérisé en ce que** les actuateurs piézoélectriques d33 (7) sont intégrés dans la peau de couverture (4, 5) côté refoulement et/ou côté aspiration.

4. Profilé aérodynamique déformable (1) suivant la revendication 3, **caractérisé en ce que** la peau de couverture (4, 5) côté refoulement et/ou côté aspiration présente/présentent une structure composite.

5. Profilé aérodynamique déformable (1) suivant l'une des revendications 1 - 4, **caractérisé en ce qu'**au moins un volet (9), muni d'actuateurs piézoélectriques d33 (7), s'articule sur le profilé (1), l'extension longitudinale du volet (9), sous l'effet d'une sollicitation électrique, s'effectuant essentiellement en direction de son plan.

6. Profilé aérodynamique déformable (1) suivant la revendication 5, **caractérisé en ce que** le au moins volet (9) s'articule sur le bord de fuite (6) du profilé.

7. Profilé aérodynamique déformable (1) suivant l'une des revendications précédentes, **caractérisé en ce que** les actuateurs piézoélectriques d33 (7) sont constitués d'éléments piézoélectriques (8) en forme de pile avec des électrodes (8a) intégrées dans ces derniers.

8. Profilé aérodynamique déformable (1) suivant la revendication 7, **caractérisé en ce que** le champ électrique (E) pour provoquer l'effet d33 est fourni par l'intermédiaire des électrodes (8a).

9. Profilé aérodynamique déformable (1) suivant la revendication 7, **caractérisé en ce que** les actuateurs piézoélectriques d33 (7) en forme de couches présentent une épaisseur (d) d'environ 0,5 à 2,5 mm.

10. Profilé aérodynamique déformable (1) suivant l'une des revendications 7 et 9, **caractérisé en ce que** les actuateurs piézoélectriques d33 (7) en forme de couches présentent des dimensions latérales (a, b) d'environ 5 à 60 mm.

11. Profilé aérodynamique déformable (1) suivant l'une des revendications précédentes, **caractérisé en ce que** le profilé aérodynamique est une pale de rotor d'hélicoptère, une voilure d'avion, une aube de turbine.
